# EUROPEAN PATENT SPECIFICATION

(11) **EP 2 457 428 B1**
(45) Date of publication and mention of the grant of the patent: **10.07.2013**
(21) Application number: 11190990.9
(22) Date of filing: 28.11.2011
(51) Int. Cl.: A01B 59/06

(54) **Coupling assembly for coupling an implement for driving to a work vehicle**
Kopplungsanordnung zum Ankoppeln einer angetriebenen Arbeitsgerät an ein Arbeitsfahrzeug
Ensemble de couplage pour le couplage d'un outil motorisé à un véhicule de travail

(30) Priority: 26.11.2010 NL 2005767
(43) Date of publication of application: 30.05.2012
(73) Proprietor: Zuidberg Techniek Holding B.V., 8307 DE Ens (NL)
(72) Inventor: Zuidberg, Jeroen Emiel, 8011 CH Zwolle (NL)
(74) Representative: Louwaard, Jan-Willem Paul

(56) References cited:
- EP-A2- 2 225 925
- EP-A2- 2 226 213
- WO-A1-2008/046958

## Description

The present invention relates to a coupling assembly for coupling an implement for driving to a work vehicle.

Such coupling assemblies are known as for instance a so-called front lift for an agricultural tractor. It is possible by means of such a front lift to arrange an implement for driving, such as a mowing machine, on the front side of the tractor so that the implement is carried by the tractor, and the implement can be coupled for driving thereof by means of a power takeoff (PTO) to a drive located on the tractor, such as the motor with which the tractor can be propelled. Such coupling assemblies are also known for coupling implements to a rear side of a work vehicle.

EP 2226213 A2 shows a coupling assembly with the characteristics of the preamble of claim 1.

The coupling assembly according to the invention comprises
- a coupling frame with all the features of claim 1.

The coupling assembly according to the invention makes it possible to adjust the orientation of the implement relative to the work vehicle by pivoting the coupling frame, and thereby the implement coupled thereto, relative to the work vehicle, or at least the chassis thereof, about a pivot axis preferably extending in the central longitudinal plane of the work vehicle.

Particularly when changing the direction of movement of the work vehicle, for instance in the case of a mowing machine or a weeding machine as implement, at the end of a field for mowing or weeding, when turning round in order to mow or weed a subsequent strip, pivoting of the implement about a pivot axis extending in the central longitudinal plane of the work vehicle has the advantage that the orientation of the implement relative to the direction of movement of the field for working relative to the implement can be improved.

Also when a tractor is driven with crab steering, wherein the central longitudinal plane extends obliquely relative to the direction of forward movement, pivoting of the implement about a pivot axis extending in the central longitudinal plane of the work vehicle has the advantage that the orientation of the implement relative to the direction of movement of the field for working relative to the implement can be improved.

The power takeoff device being situated on the coupling frame achieves that, when the coupling frame pivots relative to the work vehicle, the power takeoff device also pivots relative to the work vehicle. This makes it possible during pivoting of the coupling frame relative to the work vehicle for both the implement and the power takeoff device to pivot relative to the work vehicle, so that the orientation of the implement relative to the output drive shaft of the power takeoff device does not change during pivoting of the coupling frame relative to the work vehicle in a plane transversely of the central longitudinal plane of the work vehicle. This has the advantage that the coupling between the output drive shaft of the power takeoff device and an input drive shaft of the implement, which is generally mechanical, need not be adapted to enable a change in the orientation of the implement relative to the output drive shaft of the power takeoff device in a plane transversely of the central longitudinal plane of the work vehicle, and can for instance be the same as the known usual coupling between an output drive shaft of a power takeoff device and an input drive shaft of an implement.

As a result of the relatively high torque which the coupling has to transmit between the output drive shaft of the power takeoff device and an input drive shaft of the implement during driving of the implement, a coupling adapted to enable a change in the orientation of the implement relative to the output drive shaft of the power takeoff device in a plane transversely of the central longitudinal plane of the work vehicle during driving of the implement would have to be given an exceptionally robust form. The measure that the power takeoff device is situated on the coupling frame has the particular advantage that the coupling between the output drive shaft of the power takeoff device and an input drive shaft of the implement, which is generally mechanical, need not be adapted during driving of the implement to enable a change in the orientation of the implement relative to the output drive shaft of the power takeoff device in a plane transversely of the central longitudinal plane of the work vehicle. Even in the case pivoting takes place during driving of the implement, the coupling can for instance be the same as the known normal coupling between an output drive shaft of a power takeoff device and an input drive shaft of an implement.

The possibility of using a usual coupling between an output drive shaft of a power takeoff device and an input drive shaft of an implement has the particular advantage that implements already provided with a coupling for coupling of the input drive shaft of the implement to the output drive shaft of a power takeoff device of a work vehicle with a known coupling assembly, which does not provide for pivoting of the implement relative to the work vehicle around a pivot axis extending in the central longitudinal plane of the work vehicle, need not be provided with a different coupling.

The coupling assembly according to the invention can be arranged on the work vehicle such that the pivot axis extends substantially in vertical direction when the tractor stands on a horizontal surface. It is however also possible for the coupling assembly according to the invention to be arranged on the work vehicle such that the pivot axis extends at a different angle in the central longitudinal plane when the tractor stands on a horizontal surface, when the orientation of an implement to be coupled to the coupling assembly is such here that the implement can function.

The coupling assembly according to the invention can be arranged on the work vehicle such that the pivot axis extends substantially in the central longitudinal plane of the work vehicle. The coupling assembly according to the invention can also be arranged on the work vehicle such that the pivot axis extends substantially in a plane parallel to the central longitudinal plane of the work vehicle. It would also be possible for the coupling assembly according to the invention to be arranged on the work vehicle such that the pivot axis extends at an angle relative to the central longitudinal plane of the work vehicle when the orientation of an implement to be coupled to the coupling assembly is such here that the implement can function.

In a favourable embodiment of the coupling assembly according to the invention the drive coupling comprises an input drive shaft, wherein a rotation of the input drive shaft about the longitudinal axis thereof can be transmitted by means of the power takeoff transmission to the output drive shaft in a rotation about the longitudinal axis thereof. The power takeoff transmission is preferably configured such that the rotation speed of the output power takeoff shaft is lower than the rotation speed of the input power takeoff shaft, for instance by means of a suitable combination of co-acting toothed wheels. In this case the torque which the cardan shaft must transfer between the input drive shaft of the power takeoff device and the output drive shaft of the drive located on the work vehicle is, as a result of the transmission ratio realized by the power takeoff transmission between the input drive shaft of the power takeoff device and the output drive shaft of the power takeoff device, relatively low compared to the torque which the coupling must transmit between the output drive shaft of the power takeoff device and the input drive shaft of the implement. Because the power takeoff device is situated on the coupling frame, it is possible to give the coupling, which makes it possible during driving of the implement to change the orientation of the input drive shaft of the power takeoff device relative to the output drive shaft of the drive situated on the work vehicle, a simpler form than would be the case if the coupling between the output shaft of the power takeoff device and the input drive shaft of the implement were adapted to enable a change in orientation of the output shaft of the power takeoff device relative to the input drive shaft of the implement.

The coupling assembly preferably also comprises a cardan shaft which is connected with a first end thereof to the input drive shaft and comprises at a second end thereof connecting elements for connecting the second end to an output drive shaft of the drive situated on the work vehicle, wherein the cardan shaft comprises a cardan joint at least close to the first end thereof. A cardan joint, also referred to as universal joint, forms a robust and operationally reliable mechanical coupling between an output shaft of a drive situated on the vehicle and the input drive shaft of the power takeoff device, which makes it possible for the orientation of the input drive shaft of the power takeoff device and the output shaft of the drive situated on the work vehicle to change when the coupling frame pivots relative to the work vehicle. In a particularly advantageous embodiment hereof the cardan joint close to the first end of the cardan shaft is a double cardan joint. Such a double cardan joint enables a particularly great change in the orientation between the output drive shaft of the drive situated on the work vehicle and the input drive shaft of the power takeoff device. The double cardan joint is more particularly a double cardan joint with angle divider, also referred to as a wide-angle joint, which enables a uniform rotation movement of the shaft at the one functional end of the cardan joint to result in a uniform rotation movement of the shaft at the other functional end of the cardan joint.

In a further favourable embodiment of the coupling assembly according to the invention with a cardan shaft as coupling between the output drive shaft of the drive situated on the work vehicle and the input drive shaft of the power takeoff device, the pivot axis around which the coupling frame is pivotable substantially intersects the cardan joint. This measure makes it possible for the displacement of the part of the cardan shaft located between the cardan joint and the output drive shaft of the drive situated on the work vehicle to be small during pivoting of the coupling frame relative to the vehicle about the pivot axis thereof, with the advantage that the space which has to be provided in the work vehicle for such a displacement can be small. This measure also makes it possible for the output shaft of the drive situated on the work vehicle and the shaft of the cardan shaft extending between the output shaft of the drive and the cardan joint close to the input shaft of the power takeoff device to remain substantially in line during pivoting of the coupling frame. This has the advantage that the coupling between the output shaft of the drive situated on the work vehicle and the shaft of the cardan shaft extending between the output shaft of the drive and the cardan joint close to the input shaft of the power takeoff device can be given a relatively simple form, for instance as single cardan joint or as a flexible joint.

Instead of a cardan shaft with at least one cardan joint, it is also possible to apply a homokinetic joint, particularly when the angular range of the pivoting movement of the coupling frame is relatively small.

Instead of a mechanical coupling between the output shaft of the drive situated on the vehicle and the input shaft of the power takeoff device, another form of coupling can be provided between the drive and the power takeoff device, such as a hydraulic coupling, wherein for instance a hydraulic pump is coupled to the output drive shaft of the drive situated on the work vehicle, and a hydraulic motor is arranged on the coupling frame and coupled to the input drive shaft of the power takeoff device, wherein the hydraulic pump and the hydraulic motor are connected by means of hydraulic conduits and control valves.

In a further favourable embodiment of the coupling frame according to the invention the vehicle coupling comprises a first pivot element and a second pivot element which can each be connected by means of respective connecting shafts to the work vehicle for pivoting around the longitudinal axis of the connecting shafts, wherein the longitudinal axes of the connecting shafts coincide with the pivot axis of the coupling frame, and wherein the pivot elements are spaced apart from each other in the direction in which the pivot axis extends. These measures enable a simple and robust implementation of the vehicle coupling, wherein space can be created between the two pivot elements for guiding therethrough a coupling between the power takeoff transmission of the power takeoff device and the drive situated on the work vehicle.

In a further favourable embodiment of the coupling frame according to the invention the coupling assembly comprises a number of actuators for actuating pivoting of the coupling frame around the pivot axis thereof, wherein the actuators are connected with a first functional end thereof to the coupling frame and comprise at a second functional end thereof connecting elements for connecting the second functional end to the work vehicle. These measures enable mechanical pivoting of the coupling frame relative to the work vehicle, for instance during forward movement of the work vehicle. In a particularly favourable embodiment hereof, the coupling assembly comprises a control for controlling the actuators. Such a control can for instance be adapted to control the actuators automatically so that for instance automatic pivoting of the coupling frame, and thereby of an implement coupled thereto, is possible relative to the work vehicle, depending for instance on the change in direction of the work vehicle, or so that for instance a manual adjustment of the orientation of the coupling frame relative to the work vehicle is possible by the user of the work vehicle, for instance from a cab from which the work vehicle is controlled.

In a further favourable embodiment of the coupling frame according to the invention the implement coupling comprises at least one lifting arm, which comprises at a first end thereof an engaging element with which the implement can be placed into engagement and which at a second end thereof is connected by means of a pivot joint to the coupling frame for pivoting around a pivot axis extending substantially in a plane transversely of the central longitudinal plane of the work vehicle when the work vehicle is coupled to the coupling frame, and wherein the coupling assembly comprises a number of actuators for actuating pivoting of the lifting arm around the pivot axis thereof. These measures enable a simple coupling of the implement to the coupling frame from a situation where the implement is located on the ground to a situation where the implement is coupled to the coupling frame and is located a distance above the ground, in addition to a simple adjustment of the distance between an implement coupled to the coupling frame and the ground. In a favourable embodiment hereof the coupling assembly comprises a control for controlling the actuators. Such a control can for instance be adapted to control the actuators automatically so that an automatic adjustment of the distance is possible between an implement coupled to the coupling frame and the ground, or so that for instance a manual adjustment of the distance between an implement coupled to the coupling frame and the ground is possible by the user of the work vehicle, for instance from a cab from which the work vehicle is controlled.

In a further favourable embodiment of the coupling frame according to the invention the coupling assembly also comprises a cardan shaft which is connected with a first end thereof to the output drive shaft of the power takeoff device and comprises at a second end thereof connecting elements for connecting the second end to the input drive shaft of the implement. In addition to a cardan shaft forming a robust and operationally reliable mechanical coupling between an output shaft of the power takeoff device and the input drive shaft of an implement enabling a change in the orientation of the output shaft of the power takeoff device and the input drive shaft of the implement when the lifting arm pivots around the pivot axis thereof, the use of a cardan shaft as coupling between the output shaft of the power takeoff device and the input drive shaft of the implement in combination with a power takeoff device situated on the coupling frame makes it possible in the context of the invention that the cardan shaft, as coupling between the output drive shaft of the power takeoff device and the input drive shaft of the implement, need only provide for a change in the orientation between the output shaft of the power takeoff device and the input drive shaft of the implement as a consequence of pivoting of the lifting arm, and need not provide for a change in the orientation between the output drive shaft of the power takeoff device and the input drive shaft of the implement as a consequence of the coupling frame pivoting relative to the work vehicle if the power takeoff device were located on the work vehicle instead of on the coupling frame. If the power takeoff device were located on the work vehicle instead of on the coupling frame, a cardan shaft coupling the output shaft of the power takeoff device to the input shaft of the implement would have to be provided with two double cardan joints with angle divider, also referred to as wide-angle joints, in order to make it possible for the orientation of the output shaft of the power takeoff device to change relative to the orientation of the input shaft of the implement during pivoting of the implement relative to the work vehicle, while a uniform rotation movement of the output shaft of the power takeoff device results in a uniform rotation movement of the input shaft of the implement. The use of a cardan shaft with two double cardan joints with angle divider as coupling between the output drive shaft of the power takeoff device and the input drive shaft of the implement is relatively expensive, heavy and bulky compared to the use of a conventional cardan shaft with two single cardan joints.

In a further favourable embodiment of the coupling assembly according to the invention the coupling assembly also comprises a vehicle coupling frame which is coupled to the coupling frame by means of the at least one pivot element of the vehicle coupling for pivoting around the pivot axis thereof, and which is configured to mount the coupling frame on the work vehicle so that the coupling frame is coupled via the vehicle coupling frame to the work vehicle. This measure enables simple arrangement of the coupling assembly according to the invention on a known chassis of a work vehicle. Alternatively, a number of connecting elements co-acting with the at least one pivot element of the vehicle coupling are arranged on the chassis of a work vehicle so that the coupling frame is directly coupled for pivoting with the chassis of the work vehicle.

In a favourable embodiment of the coupling assembly according to the invention with actuators for actuating pivoting of the coupling frame about a pivot axis extending substantially in the central longitudinal plane of the work vehicle when the coupling frame is coupled to the vehicle and a vehicle coupling frame which is connected to the coupling frame by means of the at least one pivot element of the vehicle coupling for pivoting around the pivot axis thereof, the actuators are connected with the first functional end thereof to the coupling frame and connected with the second functional end thereof to the vehicle coupling frame. This measure enables simple arrangement of the coupling assembly according to the invention on a known chassis of a work vehicle. Alternatively, connecting elements are arranged on the chassis of the work vehicle for connecting a functional end of the actuators to the chassis of the work vehicle for the purpose of actuating pivoting of the coupling frame relative to the work vehicle.

The present invention also relates to a work vehicle assembly, comprising a work vehicle, preferably an agricultural tractor, and a coupling assembly according to the invention, embodiments of which have been described above, wherein the coupling frame is coupled pivotally by means of the at least one pivot element to the work vehicle.

In a favourable embodiment hereof the coupling frame is coupled to the work vehicle such that the pivot axis about which the coupling frame can be pivoted relative to the work vehicle extends substantially in the central longitudinal plane of the work vehicle.

In an alternative embodiment hereof the coupling frame is coupled to the work vehicle such that the pivot axis about which the coupling frame can be pivoted relative to the work vehicle extends substantially in a plane parallel to the central longitudinal plane of the work vehicle.

In a favourable embodiment of the work vehicle assembly according to the invention the work vehicle comprises a chassis, a number of wheels suspended from the chassis, and a drive with which power can be generated, which drive is situated on the chassis, and the coupling frame is coupled by means of the at least one pivot element to the chassis.

In a favourable embodiment hereof the coupling frame comprises a number of actuators for actuating pivoting of the coupling frame around the pivot axis thereof.

In a further favourable embodiment hereof the coupling assembly comprises a control for controlling the actuators.

In a further favourable embodiment hereof the work vehicle assembly also comprises a steering device for determining the direction of forward movement of the work vehicle during forward movement thereof by means of steering movements; wherein
- the control comprises a detector for detecting the steering movements; and
- the control for controlling the actuators is adapted to control the actuators on the basis of the detected steering movements.

These measures enable automatic adjustment of the orientation of an implement coupled to the work vehicle to the steering movements which result during the movement of the work vehicle in a change in the direction of forward movement of the work vehicle. This makes it possible for the orientation of the implement relative to the direction of movement of the ground for working relative to the implement to be adjusted automatically to the change in the direction of forward movement of the work vehicle. There is therefore a co-steering coupling frame and a co-steering power takeoff device.

In an additional or alternative embodiment hereof the control of the actuators is adapted for manual control of the actuators by the user of the work vehicle. This measure makes it possible for the user of the work vehicle to manually adjust the orientation of the implement relative to the direction of forward movement of the work vehicle.

The present invention will be further elucidated hereinbelow on the basis of exemplary embodiments shown in the accompanying drawing. These are non-limitative exemplary embodiments. In the figures the same or similar parts, components and elements are designated with the same reference numerals. In the drawing:
figure 1 is a perspective view of an embodiment of a work vehicle assembly according to the invention comprising a work vehicle and a coupling assembly according to the invention;
figure 2 is a perspective view of the coupling assembly of figure 1;
figure 3 is a side view of the coupling assembly of figure 2;
figure 4 shows a top view of the coupling assembly of figure 2 and a schematic representation of the work vehicle assembly of figure 1.

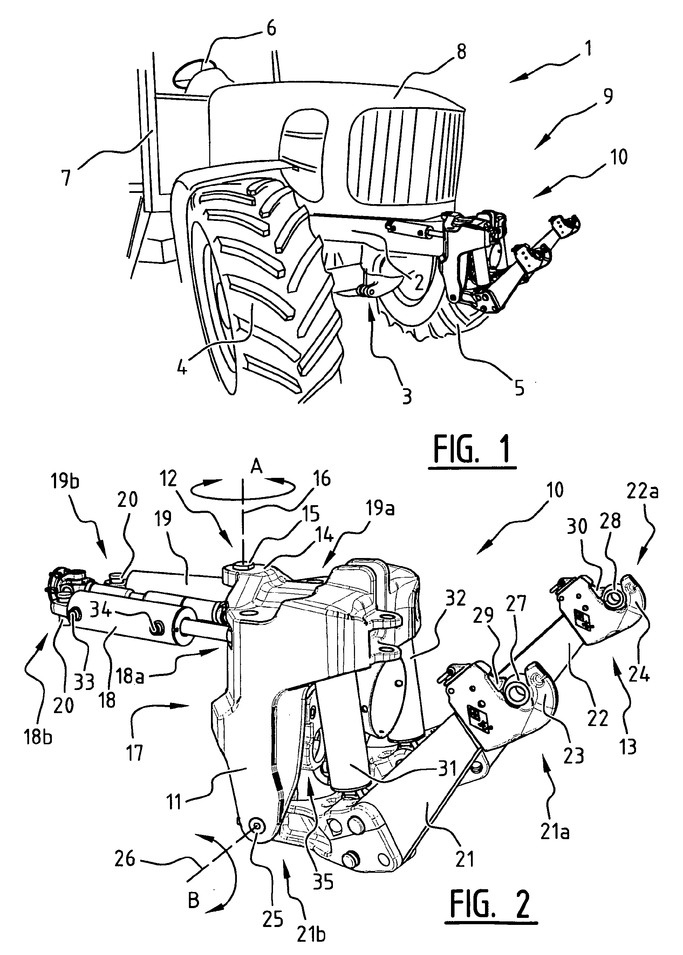

Fig. 1 shows a front side of a work vehicle in the form of an agricultural tractor 1. The tractor is shown with a chassis 2 from which two front wheels 4 and 5 are suspended by means of a front wheel suspension 3. Two rear wheels (not shown) are also suspended from chassis 2 by means of a rear wheel suspension (not shown). Front wheel suspension 3 for front wheels 4 and 5 is provided with a steering device with which front wheels 4 and 5 can be turned relative to the chassis in order to change the direction of forward movement of tractor 1 during forward progress of tractor 1. The steering device can be operated by the user of the tractor by means of a steering wheel 6 from a cab 7 which is arranged on chassis 2 and only partially shown in figure 1. Tractor 1 is provided with a motor situated under bonnet 8 and arranged on chassis 2. The motor is a drive with which power can be generated, which power can be transmitted by means of a drive train to a number of the wheels of tractor 1, for instance the rear wheels, in order to advance the tractor over a ground surface.

Agricultural tractor 1 of figure 1 is provided on the front side 9 thereof with a coupling assembly 10 which is shown in detail in figure 2.

As shown in figure 2, coupling assembly 10 comprises a coupling frame 11 provided with a vehicle coupling 12, with which the coupling assembly can be coupled to the work vehicle, and an implement coupling 13 with which an implement can be coupled to coupling assembly 10.

Vehicle coupling 12 comprises a first pivot element 14 which can be connected by means of a connecting shaft 15 to the work vehicle for pivoting around the longitudinal axis 16 of connecting shaft 15, for instance by placing connecting shaft 15 through a connecting element in the form of an eye in the chassis of the tractor.

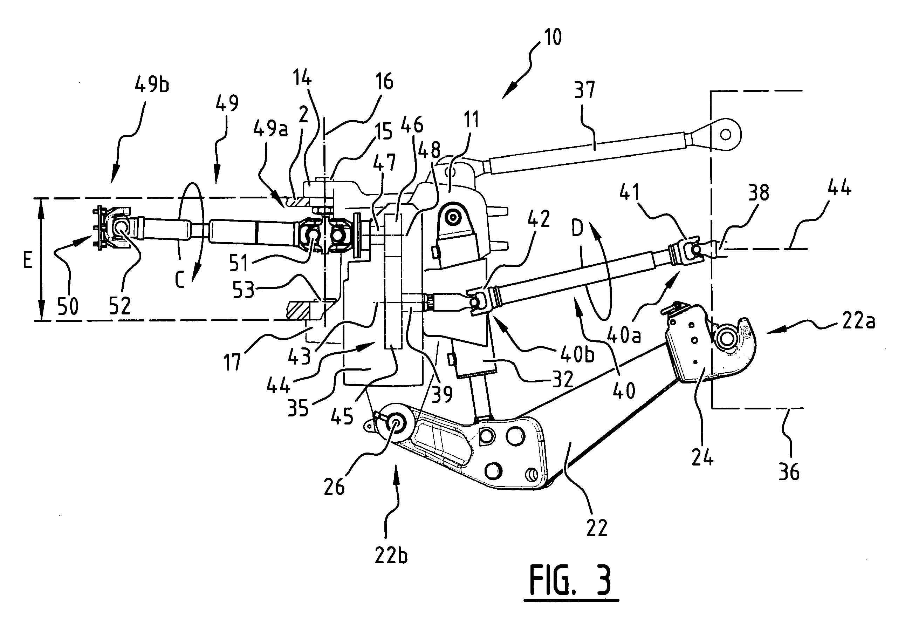

Vehicle coupling 12 also comprises a second pivot element 17 which is not visible in the view of figure 2 but can be seen in the view of figure 3. Second pivot element 17 can be connected to the work vehicle in the same way as first pivot element 14 by means of a connecting shaft for pivoting around the longitudinal axis of this connecting shaft, wherein the longitudinal axes of the connecting shafts for connecting respectively the first pivot element 14 and second pivot element 17 to the chassis of the agricultural vehicle 1 coincide and form the pivot axis 16 of coupling frame 11.

Coupling assembly 10 also comprises a number of actuators, in the shown exemplary embodiment two actuators in the form of linear operating cylinders 18 and 19, for actuating pivoting of coupling assembly 10 around pivot axis 16 thereof in the direction of arrows A, wherein the respective linear work cylinders 18 and 19 are connected with a first functional end 18a, 19a thereof to coupling assembly 10 and comprise at a second functional end 18b, 19b thereof connecting elements in the form of pin/hole connection 20 for connecting the second functional end 18b, 19b to chassis 2 of tractor 1 on which a number of connecting eyes are for instance arranged through which the pin of pin/hole connections 20 can be inserted in order to connect functional ends 18b and 19b to chassis 2.

Implement coupling 13 comprises two lifting the arms 21 and 22 which have at a first end 21a and 22a thereof an engaging element 23 and 24 which in the shown embodiment is hook-like and with which an implement can be brought into engagement, and which at a second end 21b and 22b thereof are connected by means of a pivot joint 25 to coupling frame 11 for pivoting around a pivot axis 26. The implement is not shown in figure 2. Two coupling elements 27 and 28 of the implement are however shown which are in engagement with the hook-like engaging elements 27 and 28 and which are enclosed in the hook-like engaging elements 27 and 28 by means of closing elements 29 and 30.

Coupling assembly 10 further comprises a number of actuators, in the shown exemplary embodiment two linear operating cylinders 31 and 32, for actuating pivoting of the respective lifting arms 21 and 22 around pivot axis 26 thereof.

In the shown exemplary embodiment lifting arms 31 and 32 are not coupled mechanically to each other, so that lifting arms 31 and 32 can be pivoted separately of each other around pivot axis 26 by means of respective operating cylinders 31 and 32. It is however also possible for the two lifting arms to be coupled mechanically. In that case it is possible to apply a single operating cylinder.

As shown in figure 2, operating cylinder 18 is provided with two connections 33 and 34 to which conduits can be connected, in the case of a hydraulic operating cylinder hydraulic conduits, via which conduits a fluid can be introduced into or removed from the operating cylinder in order to lengthen or shorten the operating cylinder for the purpose of thus pivoting the coupling frame about pivot axis 16. The conduits to be connected to connections 33 and 34 are connected via a system of valves to a pump, for instance a hydraulic pump. The system of valves makes it possible to determine whether the operating cylinder is lengthened or shortened. Operating cylinder 19 is also provided with two connections for connecting to operating cylinder 19 conduits which are connected via the system of valves to the pump. The system of valves forms part of a control of the coupling assembly for the purpose of controlling operating cylinders 18 and 19.

The control can also be provided with a detector for detecting steering movements effected by means of steering wheel 6, and a processor adapted to control the system of valves, and thereby operating cylinders 18 and 19, on the basis of the steering movements detected by means of the detector.

It is also possible for the control of operating cylinders 18 and 19 to also be adapted for manual control, by the user of the work vehicle, of operating cylinders 18 and 19 and thereby of the pivoting of coupling frame 11 around pivot axis 16. Operating cylinders 31 and 32, and therefore pivoting of lifting arms 21 and 22 around pivot axis 26, can also be controlled by means of a similar control.

Coupling assembly 10 also comprises a power takeoff device 35 which is situated on coupling frame 11 and which can be pivoted together with coupling frame 11 around pivot axis 16. Power takeoff device 35 is only partially shown in figure 2. Figure 3 shows a side view of coupling assembly 10 of figure 2, wherein lifting arm 21, operating cylinder 31, operating cylinder 18 and a part of coupling frame 11 are omitted in order to make power takeoff device 35 visible.

Figure 3 shows coupling assembly 10 of figure 2 in the situation where an implement 36, shown schematically with the broken lines, is coupled to the coupling assembly, wherein implement 36 is in engagement with the hook-like engaging elements at the end of the lifting arms of coupling assembly 10, of which only hook-like engaging element 24 at the end of lifting arm 22 is shown in figure 2. In addition, implement 35 is coupled by means of connecting element 37 to coupling frame 11. Together with the two lifting arms 21 and 22, connecting element 37 realizes a three-point coupling of coupling frame 11 to implement 36.

Shown is that implement 36 comprises an input drive shaft 38 for driving thereof. This input drive shaft 38 is coupled in figure 3 to the output drive shaft 39 of power takeoff device 35 by means of a cardan shaft, which comprises close to the first end 40a thereof a first cardan joint 41 and close to the second end 40b thereof a second cardan joint 42. Both cardan joints 41 and 42 are single cardan joints.

Cardan shaft 42 makes it possible for a rotation of output drive shaft 39 of power takeoff device 35 about the longitudinal axis 43 thereof to be transmitted to input drive shaft 38 of implement 36 so that drive shaft 38 rotates about longitudinal axis 44 without longitudinal axis 43 of output drive shaft 39 being in line with longitudinal axis 44 of input drive shaft 38.

Owing to the two cardan joints 41 and 42 and owing to the additional measure that the cardan shaft takes a telescopic form and can thereby be changed in the length, it is possible that when, as a result of lengthening or shortening operating cylinder 32, the lifting arm 22 pivots about pivot axis 26 thereof and the orientation of input drive shaft 38 of implement 36 changes relative to the orientation of output drive shaft 39 of power takeoff device 35, the coupling between input drive shaft 38 of implement 36 and output drive shaft 39 of power takeoff device 35 remains intact.

Power takeoff device 35 further comprises a power takeoff transmission 44. In the shown exemplary embodiment the power takeoff transmission 35 comprises two toothed wheels 45 and 46 of differing diameter. Toothed wheel 45 has a larger diameter than toothed wheel 46. Toothed wheel 45 is arranged on output drive shaft 39 of the power takeoff device. Toothed wheel 46 is arranged on input drive shaft 47 of power takeoff device 35. A rotation of input drive shaft 47 of power takeoff device 35 about longitudinal axis 48 thereof is transmitted by means of power takeoff transmission 44 to output drive shaft 45 of power takeoff device 35, resulting in a rotation of output drive shaft 45 about longitudinal axis 43 thereof.

As a result of applying a toothed wheel 45 with a diameter larger than toothed wheel 46 a transmission ratio is realized wherein a moment applied to input drive shaft 47 of power takeoff device 35 about the longitudinal axis 48 thereof results in a greater moment on output drive shaft 39 of power takeoff device 35 about the longitudinal axis 43 thereof.

Further shown in figure 3 is that coupling assembly 10 also comprises a cardan shaft 49 which is connected with a first end 49a thereof to input drive shaft 47 of power takeoff device 35 and comprises at a second end 49b thereof connecting elements in the form of hole/bolt connection 50 for connecting second end 49b to an output drive shaft of the motor located on tractor 1 of figure 1.

Cardan shaft 49 is provided close to first end 49a and close to second end 49b thereof with respectively a first cardan joint 51 and a second cardan joint 52. First cardan joint 51 is a double cardan joint, also referred to as a wide-angle joint, the second cardan coupling 52 is a single cardan joint.

When the second end of cardan joint 49 is coupled to an output drive shaft of the motor of tractor 1 of figure 1, a rotation of the output drive shaft of the motor about the longitudinal axis thereof generated by the motor results for instance in a rotation of cardan shaft 49 in the direction of arrow C, this rotation being converted by means of power takeoff transmission 44 to a rotation in the direction of arrow D of cardan shaft 40, and thereby of the input drive shaft 38 coupled thereto of implement 36.

As shown in figure 3, coupling frame 11 is provided with a first pivot element 14 which is connected by means of a connecting shaft 15 for pivoting around longitudinal axis 16 of connecting shaft 15 to chassis 2 of tractor 1 of figure 1, of which only a small part is shown in figure 3, wherein connecting shaft 15 passes through a connecting element in the form of an eye in chassis 2 of the tractor. First pivot element 14 and the eye in chassis 2 and connecting shaft 15 then together form a pivot joint.

Coupling frame 11 is also provided with a second pivot element 17. Second pivot element 17 is also connected in the same manner as first pivot element 14 by means of a connecting shaft 53 to chassis 2 for pivoting around longitudinal axis 16 of this connecting shaft 53, wherein the longitudinal axes 16 of the connecting shafts for connecting respectively first pivot element 14 and second pivot element 17 to chassis 2 coincide and form the pivot axis 16 of coupling frame 11.

As shown in figure 3, pivot elements 14 and 17 lie at a distance E from each other in the direction in which pivot axis 16 extends. The first cardan joint 51 of cardan shaft 49 is situated between first pivot element 14 and second pivot element 17, and pivot axis 16 intersects the first cardan joint 51.

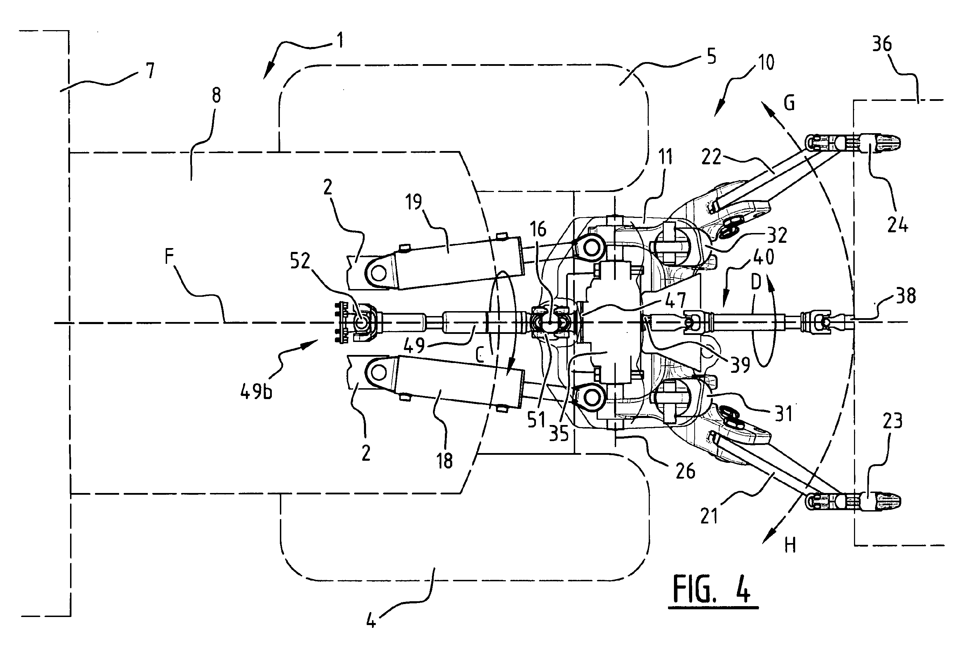

Figure 4 shows a top view of coupling assembly 10 of figure 3. By way of illustrating the orientation of coupling assembly 10 relative to tractor 1 of figure 1, tractor 1 is also shown schematically with front wheels 4, bonnet 8 and cab 7. Shown specifically is that the pivot axis 16 about which coupling frame 11 can pivot relative to tractor 1 extends perpendicularly of the plane of the drawing, and particularly in the central longitudinal plane of tractor 1 extending perpendicularly of the plane of the drawing. Pivot axis 16 extends substantially in vertical direction when the tractor stands on a horizontal surface.

It is however also possible for the pivot axis to extend at a different angle in the central longitudinal plane when the tractor stands on a horizontal surface. The pivot axis 26 about which lifting arms 21 and 22 can pivot relative to coupling frame 11 extends in a plane transversely of the central longitudinal plane F of tractor 1, and more particularly in a plane parallel to the plane of the drawing.

By controlling operating cylinders 18 and 19 from the situation as shown in figure 4 such that operating cylinder 18 is lengthened and operating cylinder 19 is shortened, coupling frame 11, and thereby the implement 36 coupled thereto, pivots about the pivot axis 16 in the direction of arrow G. The orientation of the output drive shaft of the motor connected to second end 49b of cardan shaft 49 changes here relative to the orientation of input drive shaft 47 of power takeoff device 35.

As a result of cardan shaft 49, and particularly cardan joints 51 and 52, and the telescopic form of cardan shaft 49 the coupling between the output drive shaft of the motor and the input drive shaft 47 of power takeoff device 35 remains intact during the change. Because power takeoff device 35 is situated in its entirety on the coupling frame, the orientation of output drive shaft 39 of power takeoff device 35 does not change relative to the orientation of input drive shaft 38 of implement 36 when coupling frame 11 pivots around pivot axis 16.

By controlling operating cylinders 18 and 19 from the situation as shown in figure 4 such that operating cylinder 18 is shortened and operating cylinder 19 is lengthened, coupling frame 11, and thereby the implement 36 coupled thereto, pivots about pivot axis 16 in the direction of arrow H.

Shown in the figures is that pivoting of the coupling frame about the pivot axis thereof can be actuated by means of two actuators in the form of linear operating cylinders. One, or more than two actuators could also be applied, and other forms of linear driving could also be applied, or even actuators based on rotation driving. This is also the case for the actuators shown and described for actuating pivoting of the lifting arms relative to the coupling frame. One lifting arm, or more than two, can also be applied instead of two lifting arms. It is also possible for the coupling assembly to comprise no lifting arms but to be provided instead with stationary engaging means for placing an implement in engagement with the coupling frame.

In the figures the coupling frame is pivotally connected to the chassis of the work vehicle by means of two pivot elements arranged at a distance from each other. One pivot element can also be applied, or more than two pivot elements.

In the figures the pivot axis about which the coupling frame can pivot extends in the central longitudinal plane of the work vehicle. The coupling assembly can however also be arranged on the work vehicle such that the pivot axis extends in a plane parallel to the central longitudinal plane.

The power takeoff device is coupled in the figures by means of a cardan shaft to a drive situated on the work vehicle. Another coupling can however also be provided, for instance a hydraulic coupling comprising a hydraulic pump coupled to the drive situated on the work vehicle and a hydraulic motor coupled to the power takeoff device and preferably situated on the coupling frame.

The coupling assembly is arranged in the figures on the front side of a work vehicle, and particularly in front of the front wheels. The coupling assembly can also be arranged on a rear side of a work vehicle.

The work vehicle in the figures is an agricultural tractor. The work vehicle can however also be of a different type. The work vehicle can be any self-propelling implement carrier, for instance a harvesting machine, an agricultural sprayer, a manure injector and so on. The work vehicle can also be of the type applied in maintaining roads. It is also possible for the coupling assembly according to the invention to be arranged for instance on the rear of a trailer, wherein the drive located on the work vehicle can be arranged on the trailer or on the tractive vehicle pulling the trailer.

The coupling frame in the figures is directly connected via pivot elements to the chassis of a work vehicle, although the coupling assembly can also comprise a vehicle coupling frame which, by means of the at least one pivot element of the vehicle coupling, is connected pivotally around the pivot axis thereof to the coupling frame and which is configured to mount the coupling assembly on the work vehicle so that the coupling frame is coupled via the vehicle coupling frame to the work vehicle. The actuators can be particularly connected here with the first functional end thereof to the coupling frame and be connected with the second functional end thereof to the vehicle coupling frame.

In figure 1 the coupling assembly according to the invention is located for the greater part in front of bonnet 8 of tractor 1. Because according to the invention the power takeoff device is situated on the coupling frame, it is however also possible for the coupling assembly to be situated closer to the front wheel suspension 3, and therefore largely under bonnet 8. The front side of the chassis as shown in figure 1 is then also situated closer to front wheel suspension 3.

In the figures the coupling frame can be pivoted by means of actuators controlled by means of a control. It is also possible for instance that the coupling frame is coupled mechanically to the steering device of the implement, and is thus pivoted subject to the steering movement.

## Claims

1. Coupling assembly (10) for coupling an implement (36) for driving to a work vehicle (1), comprising:
- a coupling frame (11) provided with
- a vehicle coupling (12) with which the coupling assembly (10) can be coupled to the work vehicle (1); and
- an implement coupling (13) with which the implement (36) can be coupled to the coupling assembly (10);
and
- a power takeoff device (35), comprising:
- a drive coupling (47) for coupling the power takeoff device (35) to a drive which is situated on the work vehicle and using which power can be generated;
- an output drive shaft (39) for coupling the power takeoff device (35) to an input drive shaft (38) of the implement (36) for driving;
- a power takeoff transmission (44) for transmitting power to be generated to the output drive shaft (39) of the power takeoff device (35) by means of the drive situated on the work vehicle (1);
**characterized in that**
- the vehicle coupling (12) comprises at least one pivot element (14,17) by means of which the coupling frame (11) can be coupled to the work vehicle (1) for pivoting said coupling frame (11) about a pivot axis (16) relative to said work vehicle (1); and
- the power takeoff device (35) is situated on the coupling frame (11);
such that the power takeoff device (35) can pivot about said pivot axis (16) relative to said work vehicle (1) together with said coupling frame (11).

2. Coupling assembly (10) as claimed in claim 1, wherein
- said at least one pivot element (14,17) is arranged such that when the coupling frame (11) is coupled to the vehicle (1) said pivot axis (16) extends substantially in the central longitudinal plane of the work vehicle (1) or substantially in a plane parallel to the central longitudinal plane of the work vehicle (1).

3. Coupling assembly (10) as claimed in claim 1 or 2, wherein
- the drive coupling comprises an input drive shaft (47), wherein a rotation of the input drive shaft (47) about the longitudinal axis thereof can be transmitted by means of the power takeoff transmission (44) to the output drive shaft (39) in a rotation about the longitudinal axis thereof; and
- the coupling assembly (10) also comprises a cardan shaft (49) which is connected with a first end (49a) thereof to the input drive shaft (47) and comprises at a second end (49b) thereof connecting elements (50) for connecting the second end to an output drive shaft of the drive situated on the work vehicle (1), wherein the cardan shaft (49) comprises a cardan joint (51) at least close to the first end (49a) thereof;
wherein the cardan joint (51) is preferably a double cardan joint, more preferably a double cardan joint with angle divider.

4. Coupling assembly (10) as claimed in claim 3, wherein
- the pivot axis around which the coupling frame (11) is pivotable substantially intersects the cardan joint (51).

5. Coupling assembly (10) as claimed in any of the claims 1 to 4, wherein
- the vehicle coupling (12) comprises a first pivot element (14) and a second pivot element (17) which can each be connected by means of respective connecting shafts (15,53) to the work vehicle for pivoting around the longitudinal axis of the connecting shafts, wherein the longitudinal axes (16) of the connecting shafts (15,53) coincide with the pivot axis (16) of the coupling frame (11), and wherein the pivot elements (14,17) are spaced apart from each other in the direction in which the pivot axis (16) extends.

6. Coupling assembly (10) as claimed in any of the claims 1 to 5, wherein
- the coupling assembly (10) comprises a number of actuators (18,19) for actuating pivoting of the coupling frame (11) around the pivot axis (16) thereof, wherein the actuators (18,19) are connected with a first functional end (18a,19a) thereof to the coupling frame (11) and comprise at a second functional end (18b,19b) thereof connecting elements (20) for connecting the second functional end to the work vehicle (1), and wherein the coupling assembly (10) preferably comprises a control for controlling the actuators (18,19).

7. Coupling assembly (10) as claimed in any of the claims 1 to 6, wherein
- the implement coupling (36) comprises at least one lifting arm (21,22), which comprises at a first end (21a,22a) thereof an engaging element (23,24) with which the implement (36) can be placed into engagement and which at a second end (21b,22b) thereof is connected by means of a pivot (25) to the coupling frame (11) for pivoting around a pivot axis (26) extending substantially in a plane transversely of the central longitudinal plane of the work vehicle (1) when coupled to the coupling frame, and wherein the coupling assembly (10) comprises a number of actuators (31,32) for actuating pivoting of the lifting arm (21,22) around the pivot axis (26) thereof, and wherein the coupling assembly (10) preferably comprises a control for controlling the actuators (31,32).

8. Coupling assembly (10) as claimed in any of the claims 1 to 7, wherein
- the coupling assembly (10) also comprises a cardan shaft (40) which is connected with a first end (40b) thereof to the output drive shaft (39) of the power takeoff device (35) and comprises at a second end (40a) thereof connecting elements for connecting the second end (40a) to the input drive shaft (38) of the implement (36).

9. Coupling assembly (10) as claimed in any of the claims 1 to 8, also comprising
- a vehicle coupling frame (2) which is coupled to the coupling frame (11) by means of the at least one pivot element (14,17) of the vehicle coupling (12) for pivoting around the pivot axis (16) thereof, and which is configured to mount the coupling frame on the work vehicle so that the coupling frame (11) is coupled via the vehicle coupling frame (2) to the work vehicle.

10. Coupling assembly (10) as claimed in at least claims 1, 6 and 9, wherein
- the actuators (18,19) are connected with the first functional end (18a,19a) thereof to the coupling frame (11) and connected with the second functional end (18b,19b) thereof to the vehicle coupling frame (2).

11. Work vehicle assembly, comprising
- a work vehicle (1), preferably an agricultural tractor; and
- a coupling assembly (10) as claimed in any of the claims 1 to 10;
wherein
- the coupling frame (11) is coupled pivotally by means of the at least one pivot element (14,17) to the work vehicle (1).

12. Work vehicle assembly as claimed in claim 11, wherein
- the coupling frame (11) is coupled to the work vehicle (1) such that the pivot axis (16) about which the coupling frame (11) can be pivoted relative to the work vehicle (1) extends substantially in the central longitudinal plane of the work vehicle (1); or
- the coupling frame (11) is coupled to the work vehicle (1) such that the pivot axis (16) about which the coupling frame (11) can be pivoted relative to the work vehicle (1) extends substantially in a plane parallel to the central longitudinal plane of the work vehicle (1).

13. Work vehicle assembly as claimed in claim 11 or 12, wherein the work vehicle (1) comprises:
- a chassis (2);
- a number of wheels suspended from the chassis (2); and
- a drive with which power can be generated, which drive is situated on the chassis (2); and wherein
- the coupling frame (11) is coupled pivotally to the chassis (2) by means of the at least one pivot element (14,17).

14. Work vehicle assembly as claimed in claim 13, wherein
- the coupling assembly (10) comprises a number of actuators (18,19) for actuating pivoting of the coupling frame around the pivot axis (16) thereof.

15. Work vehicle assembly as claimed in claim 14, wherein
- the coupling assembly (10) comprises a control for controlling the actuators (18,19).

16. Work vehicle assembly as claimed in claim 15, also comprising:
- a steering device (6) for determining the direction of forward movement of the work vehicle (1) during forward movement thereof by means of steering movements;
wherein
- the control comprises a detector for detecting the steering movements; and
- the control for controlling the actuators (18,19) is adapted to control the actuators (18,19) on the basis of the detected steering movements.

17. Work vehicle assembly as claimed in claim 15 or 16, wherein
- the control of the actuators (18,19) is adapted for manual control of the actuators (18,19) by the user of the work vehicle (1).

## Patentansprüche

1. Kupplungsbaugruppe (10) zum Kuppeln eines anzutreibenden Geräts (36) an ein Arbeitsfahrzeug (1), die Folgendes umfasst:
- einen Kupplungsrahmen (11) versehen mit
- einer Fahrzeugkupplung (12), mit der die Kupplungsbaugruppe (10) an das Arbeitsfahrzeug (1) gekuppelt werden kann; und
- eine Gerätekupplung (13), mit der das Gerät (36) an die Kupplungsbaugruppe (10) gekuppelt werden kann;
und
- einen Zapfwellenantrieb (35), der Folgendes umfasst:
- eine Antriebskupplung (47) zum Kuppeln des Zapfwellenantriebs (35) an einen Antrieb, der an dem Arbeitsfahrzeug angeordnet ist und die Energie verwendet, die erzeugt werden kann;
- eine Abtriebswelle (39) zum Kuppeln des Zapfwellenantriebs (35) an eine Antriebswelle (38) des anzutreibenden Geräts (36);
- ein Zapfwellenantriebsgetriebe (44) zum Übertragen von zu erzeugender Energie an die Abtriebswelle (39) des Zapfwellenantrieb (35) mittels des an dem Arbeitsfahrzeug (1) angeordneten Antriebs;
**dadurch gekennzeichnet, dass**
- die Fahrzeugkupplung (12) mindestens ein Schwenkelement (14, 17) umfasst, mittels dessen der Kupplungsrahmen (11) an das Arbeitsfahrzeug (1) gekuppelt werden kann, um den Kupplungsrahmen (11) um eine Schwenkachse (16) in Bezug zu dem Arbeitsfahrzeug (1) zu schwenken; und
- der Zapfwellenantrieb (35) derart an dem Kupplungsrahmen (11) angeordnet ist; dass der Zapfwellenantrieb (35) in Bezug zum Arbeitsfahrzeug (1) zusammen mit dem Kupplungsrahmen (11) um die Schwenkachse (16) schwenken kann.

2. Kupplungsbaugruppe (10) nach Anspruch 1, bei der
- das mindestens eine Schwenkelement (14, 17) derart angeordnet ist, dass sich, wenn der Kupplungsrahmen (11) an das Fahrzeug (1) gekuppelt ist, die Schwenkachse (16) im Wesentlichen in der Längsmittelebene des Arbeitsfahrzeugs (1) oder im Wesentlichen in einer Ebene parallel zu der Längsmittelebene des Arbeitsfahrzeugs (1) erstreckt.

3. Kupplungsbaugruppe (10) nach Anspruch 1 oder 2, bei der
- die Antriebskupplung eine Antriebswelle (47) umfasst, wobei eine Drehung der Antriebswelle (47) um ihre Längsachse mittels des Zapfwellenantriebgetriebes (44) zu der Abtriebswelle (39) in einer Drehung um die Längsachse derselben übertragen werden kann; und
- die Kupplungsbaugruppe (10) ferner eine Kardanwelle (49) umfasst, die mit einem ersten Ende (49a) derselben mit der Antriebswelle (47) verbunden ist und an ihrem zweiten Ende (49b) Verbindungselemente (50) umfasst, um das zweite Ende mit einer Abtriebswelle des an dem Arbeitsfahrzeug (1) angeordneten Antriebs zu verbinden, wobei die Kardanwelle (49) ein Kardangelenk (51) wenigstens nahe ihrem ersten Ende (49a) umfasst;
- wobei das Kardangelenk (51) vorzugsweise ein Doppelkardangelenk, und stärker bevorzugt ein Doppelkardangelenk mit Winkelteiler darstellt.

4. Kupplungsbaugruppe (10) nach Anspruch 3, bei der
- die Schwenkachse, um die der Kupplungsrahmen (11) geschwenkt werden kann, im Wesentlichen das Kardangelenk (51) kreuzt.

5. Kupplungsbaugruppe (10) nach einem der Ansprüche 1 bis 4, bei der
- die Fahrzeugkupplung (12) ein erstes Schwenkelement (14) und ein zweites Schwenkelement (17) umfasst, die jeweils mittels jeweiliger Verbindungswellen (15, 53) mit dem Arbeitsfahrzeug zum Schwenken um die Längsachse der Verbindungswellen verbunden werden können, wobei die Längsachsen (16) der Verbindungswellen (15, 53) mit den Schwenkachsen (16) des Kupplungsrahmens (11) zusammenfallen, und wobei die Schwenkelemente (14, 17) voneinander in der Richtung beabstandet sind, in der sich die Schwenkachse (16) erstreckt.

6. Kupplungsbaugruppe (10) nach einem der Ansprüche 1 bis 5, wobei
- die Kupplungsbaugruppe (10) eine Anzahl von Betätigungselementen (18, 19) zum Bewirken von Schwenken des Kupplungsrahmens (11) um seine Schwenkachse (16) umfasst, wobei die Betätigungselemente (18, 19) mit ihrem ersten funktionalen Ende (18a, 19a) mit dem Kupplungsrahmen (11) verbunden sind und an ihrem zweiten funktionalen Ende (18b, 19b) Verbindungselemente (20) zum Verbinden des zweiten funktionalen Endes mit dem Arbeitsfahrzeug (1) umfassen, und wobei die Kupplungsbaugruppe (10) vorzugsweise eine Steuerung zum Steuern der Betätigungselemente (18, 19) umfasst.

7. Kupplungsbaugruppe (10) nach einem der Ansprüche 1 bis 6, bei der
- die Gerätekupplung (36) mindestens einen Hubarm (21, 22) umfasst, der an seinem ersten Ende (21a, 22a) ein Eingriffselement (23, 24) umfasst, mit dem das Gerät (36) in Eingriff gebracht werden kann, und der an seinem zweiten Ende (21b, 22b) mittels eines Drehzapfens (25) mit dem Kupplungsrahmen (11) zum Schwenken um eine Schwenkachse (26) verbunden ist, die sich nach Kupplung an den Kupplungsrahmen im Wesentlichen in einer Ebene quer zu der Längsmittelebene des Arbeitsfahrzeugs (1) erstreckt, und wobei die Kupplungsbaugruppe (10) eine Anzahl von Betätigungselementen (31, 32) zum Bewirken von Schwenken des Hubarms (21, 22) um seine Schwenkachse (26) umfasst, und wobei die Kupplungsbaugruppe (10) vorzugsweise eine Steuerung zum Steuern der Betätigungselemente (31, 32) umfasst.

8. Kupplungsbaugruppe (10) nach einem der Ansprüche 1 bis 7, wobei
- die Kupplungsbaugruppe (10) ferner eine Kardanwelle (40) umfasst, die an ihrem ersten Ende (40b) mit der Abtriebswelle (39) des Zapfwellenantriebs (35) verbunden ist, und an ihrem zweiten Ende (40a) Verbindungselemente zum Verbinden des zweiten Endes (40a) mit der Antriebswelle (38) des Geräts (36) umfasst.

9. Kupplungsbaugruppe (10) nach einem der Ansprüche 1 bis 8, die weiter Folgendes umfasst:
- einen Fahrzeugkupplungsrahmen (2) der mittels des mindestens einen Schwenkelements (14, 17) der Fahrzeugkupplung (12) zum Schwenken um seine Schwenkachse (16) an den Kupplungsrahmen (11) gekuppelt ist, und der konfiguriert ist, um den Kupplungsrahmen derart an dem Arbeitsfahrzeug anzubringen, dass der Kupplungsrahmen (11) über den Fahrzeugkupplungsrahmen (2) an das Arbeitsfahrzeug gekuppelt wird.

10. Kupplungsbaugruppe (10) nach wenigstens den Ansprüche 1, 6 und 9, bei der
- die Betätigungselemente (18, 19) an ihrem ersten funktionalen Ende (18a, 19a) mit dem Kupplungsrahmen (11) verbunden sind, und an ihrem zweiten funktionalen Ende (18b, 19b) mit dem Fahrzeugkupplungsrahmen (2) verbunden sind.

11. Arbeitsfahrzeugbaugruppe, die Folgendes umfasst:
- ein Arbeitsfahrzeug (1), vorzugsweise einen Landwirtschaftstraktor; und
- eine Kupplungsbaugruppe (10) nach einem der Ansprüche 1 bis 10;
wobei
- der Kupplungsrahmen (11) schwenkbar mittels des mindestens einen Schwenkelements (14, 17) an das Arbeitsfahrzeug (1) gekuppelt wird.

12. Arbeitsfahrzeugbaugruppe nach Anspruch 11, bei der
- der Kupplungsrahmen (11) derart an das Arbeitsfahrzeug (1) gekuppelt wird, dass sich die Schwenkachse (16), um die der Kupplungsrahmen (11) in Bezug zum Arbeitsfahrzeug (1) geschwenkt werden kann, im Wesentlichen in der Längsmittelebene des Arbeitsfahrzeugs (1) erstreckt; oder
- der Kupplungsrahmen (11) derart an das Arbeitsfahrzeug (1) gekuppelt wird, dass sich die Schwenkachse (16), um die der Kupplungsrahmen (11) in Bezug zu dem Arbeitsfahrzeug (1) geschwenkt werden kann, im Wesentlichen in einer Ebene parallel zu der Längsmittelebene des Arbeitsfahrzeugs (1) erstreckt.

13. Arbeitsfahrzeugbaugruppe nach Anspruch 11 oder 12, bei der das Arbeitsfahrzeug (1) Folgendes umfasst:
- ein Fahrgestell (2);
- einen Anzahl von Reifen, die an dem Fahrgestell (2) aufgehängt sind;
und
- einen Antrieb, mit dem Energie erzeugt werden kann, welcher Antrieb an dem Fahrgestell (2) angeordnet ist; und wobei
- der Kupplungsrahmen (11) mittels des mindestens einen Schwenkelements (14, 17) schwenkbar mit dem Fahrgestell (2) verbunden ist.

14. Arbeitsfahrzeugbaugruppe nach Anspruch 13, bei der
- die Kupplungsbaugruppe (10) eine Anzahl von Betätigungselementen (18, 19) zum Bewirken von Schwenken des Kupplungsrahmens um seine Schwenkachse (16) umfasst.

15. Arbeitsfahrzeugbaugruppe nach Anspruch 14, bei der
- die Kupplungsbaugruppe (10) eine Steuerung zum Steuern der Betätigungselemente (18, 19) umfasst.

16. Arbeitsfahrzeugbaugruppe nach Anspruch 15, die weiter Folgendes umfasst:
- eine Lenkeinrichtung (6) zum Bestimmen der Richtung von Vorwärtsbewegung des Arbeitsfahrzeugs (1) während Vorwärtsbewegung desselben mittels Lenkbewegungen; wobei
- die Steuerung einen Detektor zum Ermitteln der Lenkbewegungen umfasst; und
- die Steuerung zum Steuern der Betätigungselemente (18, 19) eingerichtet ist, um die Betätigungselemente (18, 19) basierend auf den ermittelten Lenkbewegungen zu steuern.

17. Arbeitsfahrzeugbaugruppe nach Anspruch 15 oder 16, bei der
- die Steuerung der Betätigungselemente (18, 19) zur manuellen Steuerung der Betätigungselemente (18, 19) durch den Benutzer des Arbeitsfahrzeugs (1) eingerichtet ist.

## Revendications

1. Ensemble de couplage (10) pour coupler un outil d'entraînement (36) à un véhicule de travail (1), comprenant :
- un bâti de couplage (11) prévu avec :
- un couplage de véhicule (12) avec lequel l'ensemble de couplage (10) peut être couplé au véhicule de travail (1) ; et
- un couplage d'outil (13) avec lequel l'outil (36) peut être couplé à l'ensemble de couplage (10) ;
et
- un dispositif de prise de force (35) comprenant :
- un couplage d'entraînement (47) pour coupler le dispositif de prise de force (35) à un entraînement qui est situé sur le véhicule de travail et à l'aide duquel la force peut être générée ;
- un arbre d'entraînement de sortie (39) pour coupler le dispositif de prise de force (35) à un arbre d'entraînement d'entrée (38) de l'outil d'entraînement (36) ;
- une transmission de prise de force (44) pour transmettre la force à générer à l'arbre d'entraînement de sortie (39) du dispositif de prise de force (35) au moyen de l'entraînement situé sur le véhicule de travail (1) ;
**caractérisé en ce que** :
- le couplage de véhicule (12) comprend au moins un élément formant pivot (14, 17) au moyen duquel le bâti de couplage (11) peut être couplé au véhicule de travail (1) pour faire pivoter ledit bâti de couplage (11) autour d'un axe de pivotement (16) par rapport audit véhicule de travail (1) ; et
- le dispositif de prise de force (35) est situé sur le bâti de couplage (11) ;
de sorte que le dispositif de prise de force (35) peut pivoter autour dudit axe de pivotement (16) par rapport audit véhicule de travail (1) ensemble avec ledit bâti de couplage (11).

2. Ensemble de couplage (10) selon la revendication 1, dans lequel :
- ledit au moins un élément formant pivot (14, 17) est agencé de sorte que lorsque le bâti de couplage (11) est couplé au véhicule (1), ledit axe de pivotement (16) s'étend sensiblement dans le plan longitudinal central du véhicule de travail (1) ou sensiblement dans un plan parallèle au plan longitudinal central du véhicule de travail (1).

3. Ensemble de couplage (10) selon la revendication 1 ou 2, dans lequel :
- le couplage d'entraînement comprend un arbre d'entraînement d'entrée (47), dans lequel une rotation de l'arbre d'entraînement d'entrée (47) autour de son axe longitudinal peut être transmis au moyen de la transmission de prise de force (44), à l'arbre d'entraînement de sortie (39) dans une rotation autour de son axe longitudinal ; et
- l'ensemble de couplage (10) comprend également un arbre à cardan (49) qui est raccordé avec sa première extrémité (49a), à l'arbre d'entraînement d'entrée (47) et comprend au niveau de sa seconde extrémité (49b), des éléments de raccordement (50) pour raccorder la seconde extrémité à un arbre d'entraînement de sortie de l'entraînement situé sur le véhicule de travail (1), dans lequel l'arbre à cardan (49) comprend un joint de cardan (51) au moins à proximité de sa première extrémité (49a) ;
dans lequel le joint de cardan (51) est de préférence un double joint de cardan, de manière davantage préférée un double joint de cardan avec un diviseur d'angle.

4. Ensemble de couplage (10) selon la revendication 3, dans lequel :
- l'axe de pivotement autour duquel le bâti de couplage (11) peut pivoter, coupe sensiblement le joint de cardan (51).

5. Ensemble de couplage (10) selon l'une quelconque des revendications 1 à 4, dans lequel :
- le couplage de véhicule (12) comprend un premier élément formant pivot (14) et un second élément formant pivot (17) qui peuvent chacun être raccordés, au moyen d'arbres de raccordement (15, 53) respectifs, au véhicule de travail pour pivoter autour de l'axe longitudinal des arbres de raccordement, dans lequel les axes longitudinaux (16) des arbres de raccordement (15, 53) coïncident avec l'axe de pivotement (16) du bâti de couplage (11), et dans lequel les éléments formant pivot (14, 17) sont espacés les uns des autres dans la direction dans laquelle l'axe de pivotement (16) s'étend.

6. Ensemble de couplage (10) selon l'une quelconque des revendications 1 à 5, dans lequel :
- l'ensemble de couplage (10) comprend un certain nombre d'actionneurs (18, 19) pour actionner le pivotement du bâti de couplage (11) autour de son axe de pivotement (16), dans lequel les actionneurs (18, 19) sont raccordés avec leur première extrémité fonctionnelle (18a, 19a), au bâti de couplage (11) et comprennent au niveau de leur seconde extrémité fonctionnelle (18b, 19b), des éléments de raccordement (20) pour raccorder la seconde extrémité fonctionnelle au véhicule de travail (1), et dans lequel l'ensemble de couplage (10) comprend de préférence une commande pour commander les actionneurs (18, 19).

7. Ensemble de couplage (10) selon l'une quelconque des revendications 1 à 6, dans lequel :
- le couplage d'outil (36) comprend au moins un bras de levage (21, 22), qui comprend au niveau de sa première extrémité (21a, 22a) un élément de mise en prise (23, 24) avec lequel l'outil (36) peut être placé en mise en prise et qui, au niveau de sa seconde extrémité (21b, 22b) est raccordé au moyen d'un pivot (25) au bâti de couplage (11) pour pivoter autour d'un axe de pivotement (26) s'étendant sensiblement dans un plan transversal par rapport au plan longitudinal central du véhicule de travail (1) lorsqu'il est couplé au bâti de couplage, et dans lequel l'ensemble de couplage (10) comprend un certain nombre d'actionneurs (31, 32) pour actionner le pivotement du bras de levage (21, 22) autour de son axe de pivotement (26), et dans lequel l'ensemble de couplage (10) comprend de préférence une commande pour commander les actionneurs (31, 32).

8. Ensemble de couplage (10) selon l'une quelconque des revendications 1 à 7, dans lequel :
- l'ensemble de couplage (10) comprend également un arbre à cardan (40) qui est raccordé avec sa première extrémité (40b) à l'arbre d'entraînement de sortie (39) du dispositif de prise de force (35) et comprend au niveau de sa seconde extrémité (40a), des éléments de raccordement pour raccorder la seconde extrémité (40a) à l'arbre d'entraînement d'entrée (38) de l'outil (36).

9. Ensemble de couplage (10) selon l'une quelconque des revendications 1 à 8, comprenant également :
- un bâti de couplage de véhicule (2) qui est couplé au bâti de couplage (11) au moyen du au moins un élément formant pivot (14, 17) du couplage de véhicule (12) pour pivoter autour de son axe de pivotement (16), et qui est configuré pour monter le bâti de couplage sur le véhicule de travail de telle sorte que le bâti de couplage (11) soit couplé via le bâti de couplage de véhicule (2) au véhicule de travail.

10. Ensemble de couplage (10) selon au moins les revendications 1, 6 et 9, dans lequel :
- les actionneurs (18, 19) sont raccordés avec leur première extrémité fonctionnelle (18a, 19a) au bâti de couplage (11) et raccordés avec leur seconde extrémité fonctionnelle (18b, 19b) au bâti de couplage de véhicule (2).

11. Ensemble de véhicule de travail, comprenant :
- un véhicule de travail (1), de préférence un tracteur agricole ; et
- un ensemble de couplage (10) selon l'une quelconque des revendications 1 à 10 ;
dans lequel :
- le bâti de couplage (11) est couplé de manière pivotante, au moyen du au moins un élément formant pivot (14, 17), au véhicule de travail (1).

12. Ensemble de véhicule de travail selon la revendication 11,
dans lequel :
- le bâti de couplage (11) est couplé au véhicule de travail (1) de telle sorte que l'axe de pivotement (16) autour duquel le bâti de couplage (11) peut être pivoté par rapport au véhicule de travail (1), s'étende sensiblement dans le plan longitudinal central du véhicule de travail (1) ; ou
- le bâti de couplage (11) est couplé au véhicule de travail (1) de telle sorte que l'axe de pivotement (16) autour duquel le bâti de couplage (11) peut être pivoté par rapport au véhicule de travail (1) s'étende sensiblement dans un plan parallèle au plan longitudinal central du véhicule de travail (1).

13. Ensemble de véhicule de travail selon la revendication 11 ou 12, dans lequel le véhicule de travail (1) comprend :
- un châssis (2) ;
- un certain nombre de roues suspendues au châssis (2) ; et
- un entraînement avec lequel la force peut être générée, lequel l'entraînement est situé sur le châssis (2) ; et dans lequel :
- le bâti de couplage (11) est couplé de manière pivotante au châssis (2) au moyen du au moins un élément formant pivot (14, 17).

14. Ensemble de véhicule de travail selon la revendication 13, dans lequel :
- l'ensemble de couplage (10) comprend un certain nombre d'actionneurs (18, 19) pour actionner le pivotement du bâti de couplage autour de son axe de pivotement (16).

15. Ensemble de véhicule de travail selon la revendication 14, dans lequel :
- l'ensemble de couplage (10) comprend une commande pour commander les actionneurs (18, 19).

16. Ensemble de véhicule de travail selon la revendication 15, comprenant également :
- un dispositif de direction (6) pour déterminer la direction du déplacement vers l'avant du véhicule de travail (1) pendant son déplacement vers l'avant au moyen des mouvements de direction ;
dans lequel :
- la commande comprend un détecteur pour détecter les mouvements de direction ; et
- la commande pour commander les actionneurs (18, 19) est adaptée pour commander les actionneurs (18, 19) sur la base des mouvements de direction détectés.

17. Ensemble de véhicule de travail selon la revendication 15 ou 16, dans lequel :
- la commande des actionneurs (18, 19) est adaptée pour la commande manuelle des actionneurs (18, 19) par l'utilisateur du véhicule de travail (1).
